# EUROPÄISCHE PATENTSCHRIFT

(11) **EP 3 740 673 B1**
(45) Veröffentlichungstag und Bekanntmachung des Hinweises auf die Patenterteilung: **01.01.2025**
(21) Anmeldenummer: 19700891.5
(22) Anmeldetag: 15.01.2019
(51) Int. Cl.: F03D 7/02, H02K 7/102, H02K 7/18, F03D 15/20, H02K 7/10

(54) **ARRETIER- UND BREMSMODUL FÜR EINE WINDENERGIEANLAGE SOWIE GENERATOR UND WINDENERGIEANLAGE MIT SELBIGEM**
LATCHING AND BRAKING MODULE FOR A WIND TURBINE AND GENERATOR, AND WIND TURBINE COMPRISING SAME
MODULE D'ARRÊT ET DE FREINAGE D'UNE ÉOLIENNE AINSI QUE GÉNÉRATEUR ET ÉOLIENNE MUNIS DUDIT MODULE

(30) Priorität: 17.01.2018 DE 102018100951
(43) Veröffentlichungstag der Anmeldung: 25.11.2020
(73) Patentinhaber: Wobben Properties GmbH, 26607 Aurich (DE)
(72) Erfinder: FISCHER, Lars, 26506 Norden (DE); OBERINGER, Oliver, 66453 Gersheim (DE)
(74) Vertreter: Eisenführ Speiser
(86) Internationale Anmeldenummer: PCT/EP2019/050867
(87) Internationale Veröffentlichungsnummer: WO 2019/141650

(56) Entgegenhaltungen:
- EP-A1- 1 925 820
- EP-A1- 2 896 824
- DE-A1- 102009 017 531
- DE-A1- 102012 215 575

## Beschreibung

Die vorliegende Erfindung betrifft ein Arretier- und Bremsmodul für eine Windenergieanlage, gemäß dem Oberbegriff von Anspruch 1.

In der prioritätsbegründenden deutschen Anmeldung hat das Deutsche Patent- und Markenamt die folgenden Dokumente recherchiert: DE 10 2009 017 531 A1, DE 10 2012 208 549 A1, DE 10 2012 215 575 A1 und EP 2 566 017A1.

Windenergieanlagen der vorbezeichneten Art werden auch als Windenergieanlagen mit Außenläufer-Generatoren bezeichnet. Sie unterscheiden sich dadurch vom sogenannten Innenläufer-Generatoren, dass der Statordes Generators (Generatorstator) radial gesehen innenliegend angeordnet ist, während der Rotor des Generators (Generatorrotor) außen um ihn herum umläuft. Solche Generatoren haben die allgemein bekannten Vorteile, dass konstruktiv ein größerer Luftspaltdurchmesser bei gleichem Außendurchmesser des Generators realisiert werden kann. Bei gleicher Packungsdichte des Generators ist hierdurch eine höhere Leistungsausbeute im Vergleich zu einem Innenläufer-Generator möglich.

Windenergieanlagen mit Außenläufer-Generatoren sind beispielsweise aus DE 10 2012 208 549.1 bekannt.

Da Windenergieanlagen nicht ständig und immerzu im Betrieb sein können, sondern bisweilen auch für notwendige Wartungs- und Inspektionsarbeiten in Stillstand versetzt werden müssen, weisen Windenergieanlagen üblicherweise Arretiervorrichtungen auf. Bei bekannten Windenergieanlagen wird der aerodynamische Rotor oder der Generatorrotor mittels eines oder mehrerer Arretierbolzen in einer vorbestimmten Stillstandsposition arretiert, wobei der Arretierbolzen üblicherweise in eine korrespondierend ausgeformte Ausnehmung eingreift und formschlüssige Verriegelung herbeiführt.

Aus EP 2 896 824 A1 ist eine Bremsanlage für einen Generator einer Windenergieanlage bekannt. Der Generator hat eine Statorbaugruppe mit einer stationären Achse und eine sich außen um die Statorbaugruppe drehende Rotorbaugruppe. An der stationären Welle ist ein Flansch mit sich radial nach außen erstreckenden Armen angeordnet, an deren Enden jeweils Bremssättel sowie Rotorsperrsysteme vorgesehen sind.

Aufgrund der teils sehr hohen Anlagengewichte und damit verbundenen trägen Massen sowie der hohen Windangriffsflächen sind signifikante Haltekräfte im Bereich von mehreren Tausend Kilonewton von diesen Arretierbolzen aufzunehmen. Daher liegt besonderes Augenmerk auf einer mechanisch sicheren, d. h. hochbelastbaren Anbringung der Arretierbolzen auf der Windenergieanlage. Dasselbe gilt für Bremsvorrichtungen an Windenergieanlagen. Windenergieanlagen werden üblicherweise von ihrer Betriebsumdrehungszahl ausgehend aerodynamisch gebremst. Zusätzliche Bremsvorrichtungen werden optional eingesetzt, um die Windenergieanlage aus sehr geringen Geschwindigkeiten in den Stillstand abzubremsen und im Stillstand zu halten, so lange, bis die Arretierbolzen eine Verriegelung der Anlage in ihrer Stillstandsposition erreicht haben.

Bei bisherigen Anlagen sind die Arretierbolzen und die Bremsvorrichtungen jeweils mechanisch vollständig isolierte Systeme, die unabhängig voneinander an der Windenergieanlage montiert werden. Da es zum Ausüben einer korrekten Funktion auf präzise Positionierung ankommt, ist für jedes dieser Systeme eine entsprechende Ausrichtarbeit notwendig. Dies kann in der Praxis zwar im Ergebnis zufriedenstellend von den Monteuren bewältigt werden, der hierfür notwendige Aufwand wird aber als nachteilig angesehen.

Demzufolge lag der Erfindung die Aufgabe zugrunde, die vorstehend beschriebenen Nachteile möglichst weitgehend abzumildern. Insbesondere lag der Erfindung die Aufgabe zugrunde, die allgemein bekannten Windenergieanlagen dahingehend zu verbessern, dass eine verbesserte Montage der Arretier- und Bremsvorrichtungen erfolgen kann, ohne hierbei die Leistungsfähigkeit jener Vorrichtungen zu beeinträchtigen. Jedenfalls lag der Erfindung die Aufgabe zugrunde, eine alternative Gestaltung anzugeben.

Die Erfindung löst die ihr zugrunde liegende Aufgabe, indem sie ein Arretier- und Bremsmodul mit den Merkmalen von Anspruch 1 angibt. Insbesondere schlägt die Erfindung ein Arretier- und Bremsmodul für eine Windenergieanlage der eingangs bezeichneten Art vor, welches eine Tragstruktur, eine Anzahl an der Tragstruktur montierter Arretierbolzen, die dazu eingerichtet ist bzw. sind, den Generatorrotor im Stillstand zu arretieren, und eine Anzahl an der Tragstruktur montierter Bremsvorrichtungen aufweist, die dazu eingerichtet ist bzw. sind, den Generatorrotor zu bremsen und/oder zumindest temporär in Stillstand zu halten.

Die Erfindung macht sich die Erkenntnis zunutze, dass die Unterbringung sämtlicher Arretierbolzen und Bremsvorrichtungen in einer gemeinsamen Tragstruktur eine extrem kompakte Anlagenkonstruktion in Längsrichtung, also in Richtung der Rotationsachse ermöglicht. Zugleich erlaubt das Modulkonzept die Anbringung einer Brems- und Arretierlösung auf einem vergleichsweise großen Wirkungsdurchmesser, insbesondere bei einer Außenläufer-Generatorlösung. Diese Vorteile werden erreicht, ohne die Montagefreundlichkeit zu kompromittieren, da .es durch das Bereitstellen einer zentralisierten Tragstruktur weiterhin möglich ist, den bzw. die Arretierbolzen und die Bremsvorrichtung(en) bereits im Vorfeld der Errichtung der Windenergieanlage vorab zu installieren. Dies kann am Aufstellort oder fern vom Aufstellort der Windenergieanlage erfolgen. Jedenfalls wird die Anzahl der Installationsschritte am Aufstellort deutlich verringert. Es muss lediglich die gesamte Tragstruktur mit all ihren Brems- und Arretiervorrichtungen mittels eines Krans auf den Turm der Windenergieanlage gehoben werden. Gegebenenfalls kann der Generator mitsamt dem Arretier- und Bremsmodul zusammen auf den Turm gehoben werden. Es ist insbesondere nicht notwendig, Einzelteile der Bremse separat auf den Turm der Windenergieanlage zu verbringen.

Die Erfindung wird vorteilhaft weitergebildet, indem die Tragstruktur Verbindungsmittel zur Montage zwischen einem MaschinenträgerderWindenergieanlage und dem Generator der Windenergieanlage aufweist. Die Tragstruktur wird mit anderen Worten maschinenträgerseitig an dem Generator montiert bzw. generatorseitig an dem Maschinenträger oder einem an dem Maschinenträger befestigten Achszapfen. Dafür weisen die Verbindungsmittel vorzugsweise einen Flansch zur Befestigung der Tragstruktur an dem Maschinenträger oder an einem Achszapfen der Windenergieanlage auf. Die Montagetragstruktur mittels eines Flanschs an der Windenergieanlage ist von entsprechend geschultem Fachpersonal leicht beherrschbar, mechanisch hoch belastbar und zugleich mit geringen Fertigungstoleranzen herstellbar. Diese Vorteile werden durch die zentralisierte Montage simultan allen Arretierbolzen und Bremsvorrichtungen zuteil.

In einer bevorzugten Ausführungsform umfassen die Verbindungsmittel einen oder mehrere Abstandshalter zur Positionierung der Tragstruktur relativ zum Generatorstator.

Erfindungsgemäß ist die Tragstruktur um eine Längsachse umlaufend ausgebildet, besonders bevorzugt ringförmig. Die Längsachse ist im montierten Zustand des Arretier- und Bremsmoduls vorzugsweise parallel, besonders bevorzugt koaxial zur Rotationsachse des Generators ausgerichtet. Unter ringförmig wird im Sinne der Erfindung eine im Wesentlichen ringförmige geometrische Ausbildung verstanden, bei der sich die Tragstruktur um eine innere Ausnehmung herum geschlossen gestaltet. Es ist nicht zwingend eine streng zylindrische bzw. hohlzylindrische Ausbildung des Rings erforderlich. Die Bremsvorrichtungen werden vorzugsweise so angeordnet, dass die Bremsbeläge im Wesentlichen auf dem gleichen Wirkdurchmesser liegen.

Die Abstandshalter sind in einer bevorzugten Ausführungsform in Richtung der Längsachse reversibel lösbar mit der Tragstruktur und dem Generatorstator verbunden. Unter einer reversiblen Lösbarkeit wird im Sinne der Erfindung verstanden, dass die Abstandshalter beschädigungsfrei im Wesentlichen beliebig oft von der Tragstruktur bzw. von dem Generatorstator entfernt werden und mit ihr bzw. ihm verbunden werden können.

Die Abstandshalter sind besonders bevorzugt dazu eingerichtet, das Arretier- und Bremsmodul bzw. die Tragstruktur präzise relativ zu dem Generatorstator zu positionieren und in der gewünschten Position zu fixieren. Dies erlaubt beispielsweise ein gemeinsames Anheben des Arretier- und Bremsmoduls und des Generators auf den Turm der Windenergieanlage und die gemeinsame Positionierung auf einem Achszapfen, der an dem Maschinenträger der Windenergieanlage montiert ist. Die Vorgabe definierter Abstände zwischen Arretier- und Bremsmodul einerseits und Generator andererseits vereinfacht das präzise Einpassen sowohl des Arretier- und Bremsmoduls als auch des Generators an die Montagepunkte auf dem Achszapfen oder an entsprechenden anderen Elementen der Windenergieanlage. Besonders bevorzugt ist die Länge der Abstandshalter um ein vorbestimmtes Maß höher als der designierte Abstand zwischen Brems- und Arretiermodul und Generator im vollständig montierten Zustand. Das vorbestimmte Maß ist vorzugsweise so ausgewählt, dass bei einem Aufschieben des Generators und des Brems- und Arretiermoduls auf den Achszapfen nicht beide Bauteile mit ihren Montageflanschen gleichzeitig am Achszapfen anliegen. Dadurch werden nicht alle Flanschverbindungen gleichzeitig auf den Achszapfen aufgefädelt, sondern nacheinander. Nach vollständiger Montage eines ersten der Teile (Brems- und Arretiermodul und Generator) an der Windenergieanlage können die Abstandshalter einfach entfernt werden, und das zweite der Teile ebenfalls am Achszapfen bzw. Maschinenträger montiert werden.

In einer weiteren bevorzugten Ausgestaltung ist der Generator als Ringgenerator ausgebildet, und die Tragstruktur ist zumindest partiell innenliegend in dem Generator angeordnet. Hierunter ist zu verstehen, dass sich die Tragstruktur zumindest mit einem Teilabschnitt in Richtung der Längsachse in den radial inneren Freiraum des Generators hinein erstreckt. Hierdurch ist der Platzbedarf für das Arretier- und Bremsmodul in Richtung der Längsachse ist zugleich minimal.

In bevorzugten Ausgestaltungen hat das Arretier- und Bremsmodul eine Erstreckung in Richtung der Längsachse in einem Bereich von 1 m oder weniger, besonders bevorzugt in einem Bereich von 80 cm oder weniger. Weiter vorzugsweise befindet sich die Tragstruktur vorzugsweise um wenigstens die Hälfte ihrer Erstreckung in Richtung der Längsachse innerhalb des Generators.

Die Arretierbolzen sind bezogen auf die Längsachse vorzugsweise in radialer Richtung beweglich an der Tragstruktur aufgenommen.

Erfindungsgemäß weisen die Bremsvorrichtungen jeweils mindestens einen Bremsbelag auf, wobei die Bremsbeläge der Bremsvorrichtungen bezogen auf die Längsachse in radialer Richtung beweglich an der Tragstruktur aufgenommen sind.

Weiter vorzugsweise sind die Bremsvorrichtungen entlang des äußeren Umfangs der Tragstruktur angeordnet und vorzugsweise bezogen auf die Längsachse radial von der Tragstruktur vorstehend angeordnet. Die radiale Bewegung der Bremsbeläge hat wiederum zum Vorteil, dass der Platzbedarf der Bremsvorrichtung in Richtung der Längsachse minimiert wird.

In einer weiteren bevorzugten Ausführungsform der Erfindung sind die Arretierbolzen mit einem ersten Antrieb wirkverbunden und mittels des Antriebs zwischen einer Freigabestellung und einer Arretierstellung hin und her bewegbar, wobei der Antrieb der Arretierbolzen als fluidischer Antrieb, vorzugsweise als hydraulischer Antrieb ausgebildet ist. Die Auswahl des fluidischen Antriebs hat den Vorteil, dass mit entsprechenden Hydraulikmedien sehr hohe Fluiddrücke und somit sehr hohe Betätigungskräfte erreicht werden können, und zugleich die Aktuatoren noch sehr kompakt hinsichtlich ihres Platzbedarfs sind. Beispielsweise ist der Antrieb dazu ausgebildet, einen Fluiddruck von 150 Bar oder mehr, besonders bevorzugt in einem Bereich von 200 Bar oder mehr aufzubringen.

In einer weiteren bevorzugten Ausführungsform sind die Bremsbeläge der Bremsvorrichtungen jeweils mit einem zweiten Antrieb wirkverbunden und mittels des Antriebs zwischen einer Freigabestellung und einer Bremsstellung hin und her bewegbar, wobei der Antrieb der Bremsvorrichtungen als elektromagnetischer Antrieb ausgebildet ist oder als fluidischer Antrieb, vorzugsweise als hydraulischer Antrieb. In denjenigen Ausführungsformen, in denen auch der zweite Antrieb als fluidischer Antrieb ausgebildet ist, wird vorzugsweise ein erster Fluidkreislauf für die Arretierbolzen sowie ein dedizierter zweiter Fluidkreislauf für die Bremsvorrichtungen bereitgestellt, wobei der Fluidkreislauf für die Bremsvorrichtungen vorzugsweise lediglich einen reduzierten Betriebsdruck bereitzustellen braucht. Vorzugsweise liegt der Betriebsdruck im Fluidkreislauf für die Bremsvorrichtungen zwischen 50 und 75 %, besonders bevorzugt in einem Bereich zwischen 60 und 70 % des Betriebsdrucks des Fluidkreislaufs für die Arretierbolzen.

In einer weiteren bevorzugten Ausgestaltung der Erfindung, die zugleich ein eigenständiger Aspekt der Erfindung ist, weist die Tragstruktur mehrere Lüftungsausnehmungen auf, die sich, vorzugsweise in Richtung der Längsachse, durch die Tragstruktur hindurch erstrecken, wobei vorzugsweise einer, mehreren oder sämtlichen der Lüftungsausnehmungen ein Lüfter zum Erzeugen eines Luftstroms zugeordnet ist. Durch diese Weiterbildung wird aus dem zuvor beschriebenen Arretier- und Bremsmodul ein Arretier-, Brems- und Lüftungsmodul, welches neben dem Arretieren und Bremsen zusätzlich die Funktion der Wärmeabfuhr aus dem Inneren des Generators leistet. Für das Unterbringen der Lüftungsausnehmungen und Lüfter in der Tragstruktur wird in Richtung der Längsachse kein zusätzlicher Platz benötigt, was diese Lösung mit Blick auf eine angestrebte kompakte Baugröße der Windenergieanlagengondel als besonders vorteilhaft darstellt.

Die Erfindung wurde anhand eines ersten Aspekts vorstehend mit Bezug auf das Arretier- und Bremsmodul selbst beschrieben.

Die Erfindung betrifft in einem weiteren Aspekt einen Generator für eine Windenergieanlage, welche eine Rotornabe aufweist, wobei der Generator dazu eingerichtet ist, mit der Rotornabe wirkverbunden zu werden und elektrische Energie zu erzeugen.

Die Erfindung löst die eingangs bezeichnete Aufgabe bei einem solchen Generator, indem der Generator einen Generatorstator aufweist, einen außen um den Generatorstator umlaufenden, von der Rotornabe angetriebenen Generatorrotor aufweist und ein Arretier- und Bremsmodul zum Abbremsen, Halten und Arretieren des Generatorrotors aufweist, wobei das Arretier- und Bremsmodul nach einer der vorstehend beschriebenen bevorzugten Ausführungsformen ausgebildet ist.

Der Generator macht sich die gleichen Vorteile und bevorzugten Ausführungsformen zunutze wie das vorstehend beschriebene Arretier- und Bremsmodul bzw. Arretier-, Brems- und Lüftungsmodul, weswegen zur Vermeidung von Wiederholungen auf die obigen Ausführungen verwiesen wird.

Zur Kooperation mit dem Arretier- und Bremsmodul weist der Generatorrotor insbesondere ein zumindest teilweise ringförmig umlaufend ausgebildetes Bremselement auf, und die Bremsbeläge des Arretier- und Bremsmoduls sind dazu eingerichtet, reibschlüssig oder kraftschlüssig an dem Bremselement anzugreifen. Das Bremselement ist besonders bevorzugt als ein umlaufender Ring oder eine Mehrzahl teilweise umlaufender Ringsegmente ausgebildet.

Weiter vorzugsweise weist der Generatorrotor vorzugsweise eine Anzahl Ausnehmungen zur wenigstens partiellen Aufnahme des bzw. jeweils eines der Anzahl Arretierbolzen auf. Besonders bevorzugt erstreckt sich die Anzahl Ausnehmungen in einer radial innenliegenden Umfangswandung des Generatorrotors.

In einem weiteren Aspekt betrifft die vorliegende Erfindung eine Windenergieanlage, welche eine Rotornabe und einen mit der Rotornabe wirkverbundenen Generator zur Erzeugung elektrischer Energie aufweist.

Die Erfindung löst die ihr zugrundeliegende, eingangs bezeichnete Aufgabe bei einer solchen Windenergieanlage, indem der Generator nach einer der vorstehend beschriebenen bevorzugten Ausführungsformen ausgebildet ist. Auch die Windenergieanlage macht sich die Vorteile und bevorzugten Ausführungsformen des erfindungsgemäßen Arretier- und Bremsmoduls zunutze, weswegen auch diesbezüglich zur Vermeidung von Wiederholungen auf die vorstehenden Ausführungen verwiesen wird.

Sofern im Rahmen der Erfindung von einem Generator gesprochen wird, ist vorzugsweise ein fremderregter Synchrongenerator, insbesondere ein fremderregter Synchronringgenerator, oder alternativ ein permanenterregter Generator ausgewählt. Der Generator ist vorzugsweise ein vielpoliger Generator, insbesondere ein vielpoliger Synchron-Ringgenerator. Unter "vielpolig" wird eine Vielzahl von Statorpolen verstanden, insbesondere eine Ausbildung mit wenigstens 48 Statorzähnen, häufig sogar mit deutlich mehr Statorzähnen wie insbesondere 96 Statorzähnen oder noch mehr Statorzähnen. Der magnetisch aktive Bereich des Generators, nämlich sowohl des Rotors, der auch als Läufer bezeichnet werden kann, als auch des Stators ist in einem ringförmigen Bereich um die Drehachse des Generators angeordnet. So ist insbesondere ein Bereich von 0 bis wenigstens 50 Prozent des Radius des Luftspalts frei von Materialien, die elektrischen Strom oder elektrisches Feld des Generators führen. Insbesondere ist dieser Innenraum vollständig frei und grundsätzlich auch begehbar. Häufig beträgt dieser Bereich auch mehr als 0 bis 50 Prozent des Luftspaltradius, insbesondere bis zu 0 bis 70 Prozent oder sogar 0 bis 80 Prozent des Luftspaltradius. Je nach Aufbau kann eine Tragstruktur in diesem inneren Bereich vorhanden sein, die aber in einigen Ausführungen axial versetzt ausgebildet sein kann. Der Generator ist vorzugsweise ein langsam drehender Generator, wobei Umdrehungsgeschwindigkeiten von 100 Umdrehungen pro Minute oder weniger, insbesondere 50 Umdrehungen pro Minute oder weniger, besonders bevorzugt 30 Umdrehungen pro Minute oder weniger als langsam drehend verstanden werden, letzteres insbesondere, wenn die Windenergieanlage eine einer direkt angetriebene, also getriebelose Windenergieanlage ist.

Die Erfindung wird nachfolgend unter Bezugnahme auf die beigefügten Figuren anhand eines bevorzugten Ausführungsbeispiels näher beschrieben. Hierbei zeigen:
- Fig. 1:: eine Windenergieanlage gemäß der vorliegenden Erfindung,
- Fig. 2:: eine schematische Querschnittsansicht einer Gondel der Windenergieanlage gemäß Figur 1,
- Fig. 3:: eine schematische räumliche Ansicht eines Arretier- und Bremsmoduls eines Generators der Windenergieanlage der Figuren 1 und 2,
- Fig. 4:: eine Detailansicht des Arretier- und Bremsmoduls gemäß Figur 3, und
- Fig. 5:: eine weitere Detailansicht des Arretier- und Bremsmoduls gemäß den Figu-ren 3 und 4.

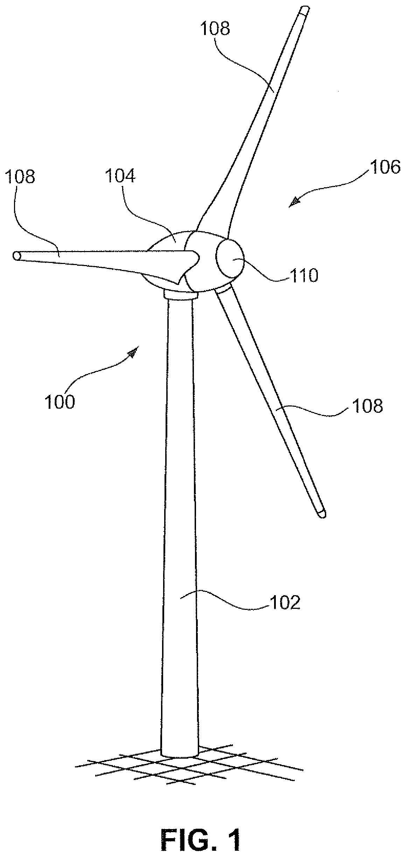

Figur 1 zeigt eine Windenergieanlage 100 mit einem Turm 102 und einer Gondel 104. An der Gondel 104 ist eine Rotornabe 106 mit drei Rotorblättern 108 und einem Spinner 110 angeordnet. Die Rotorblätter 108 sind mit ihrer Rotorblattwurzel an einer Rotornabe angeordnet. Die Rotornabe 106 wird im Betrieb durch den Wind in eine Drehbewegung versetzt und treibt dadurch einen (nicht dargestellten) Generator in der Gondel 104 an.

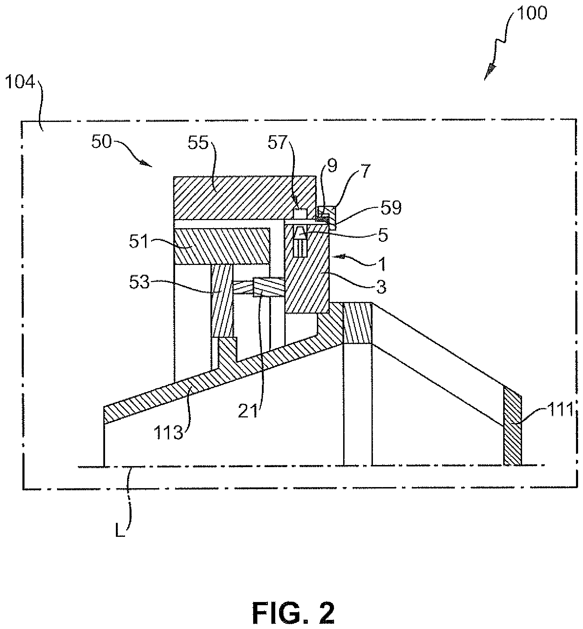

In Figur 2 ist schematisch das Innenleben der Gondel 104 der Windenergieanlage 100 dargestellt. In der Gondel 104 ist ein Maschinenträger 111 über einen Azimutantrieb drehbar auf dem Turm 102 gelagert. An dem Maschinenträger 111 ist ein Achszapfen 113 über Flanschverbindung befestigt. Der Achszapfen kann wie gezeigt einteilig, oder alternativ auch mehrteilig ausgebildet sein.

An dem Achszapfen 113 ist ein Generator 50 montiert. Der Generator 50 weist einen Stator 51 auf, der an einer Stator-Tragstruktur 53 befestigt ist und über die Stator-Tragstruktur 53 an dem Achszapfen 113 angeordnet ist. Außen um den Stator 51 herum läuft ein Generatorrotor 55 um. Der Generator 50 ist daher ein Außenläufer-Generator.

An dem Generator 50 ist maschinenträgerseitig ein Arretier- und Bremsmodul 1 gemäß der vorliegenden Erfindung angeordnet. Im vorliegend gezeigten Ausführungsbeispiel ist das Arretier- und Bremsmodul 1 zwischen dem Maschinenträger 111 und dem Generator 50 an dem Achszapfen 113 befestigt. Alternativ könnte das Arretier- und Bremsmodul 1 auch direkt am Maschinenträger 111 befestigt werden.

Das Arretier- und Bremsmodul 1 wird mittels eines oder mehrerer Abstandshalter 21 relativ zu dem Generator 50, und insbesondere zu dem Stator 51 des Generators 50 positioniert und bis zum Entfernen der Abstandshalter 21 in Position gehalten. Durch die Abstandshalter 21 wird eine vereinfachte Positionierung sowohl des Generatorstators 51 als auch des Arretier- und Bremsmoduls 1 nacheinander relativ zum Achszapfen 113 ermöglicht.

Wie sich aus den folgenden Figuren noch näher ergibt, weist das Arretier- und Bremsmodul 1 eine Tragstruktur 3 auf, an welcher eine Mehrzahl von Arretierbolzen 5 radial beweglich angeordnet sind. Die Arretierbolzen 5 sind dazu eingerichtet, in entsprechende Ausnehmungen 57 des Generatorrotors 55 einzugreifen, und im Eingriffszustand eine Relativbewegung zwischen Generatorstator 51 und Generatorrotor 50 beziehungsweise zwischen dem Achszapfen 113 und dem Generatorrotor 55 zu unterbinden.

Zusätzlich weist das Arretier- und Bremsmodul 1 eine Anzahl Bremsvorrichtungen 7 auf, die jeweils mindestens einen radial beweglichen Bremsbelag 9 aufweisen. Der Bremsbelag 9 ist zwischen einer Freigabe und einer Bremsposition relativ zu einem ringförmigen Bremselement 59 bewegbar ausgebildet.

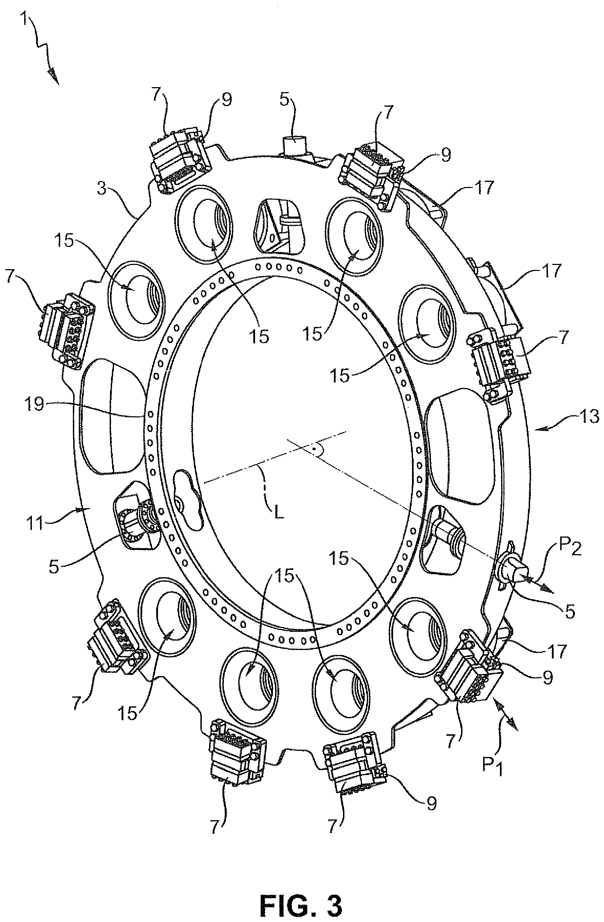

Zur Veranschaulichung der strukturellen Anordnung der verschiedenen Funktionselemente ist in Figur 3 das Arretier- und Bremsmodul 1 isoliert dargestellt. Das Arretier- und Bremsmodul 1 weist eine erste Stirnseite 11 und eine zweite Stirnseite 13 auf, die gegenüberliegend der ersten Stirnseite 11 ausgebildet ist. Die erste Stirnseite 11 ist die maschinenträgerseitige Stirnseite des Arretier- und Bremsmoduls 1.

Die Tragstruktur 3 weist eine Mehrzahl von Lüftungsöffnungen 15 auf, die sich von der ersten Stirnseite 11 zur zweiten Stirnseite 13 durch die Tragstruktur 3 hindurch erstrecken. Vorzugsweise ist jeder der Lüftungsöffnungen 15 ein Lüfter 17 zugeordnet. Im vorliegenden Ausführungsbeispiel ist der Lüfter jeweils auf der zweiten Stirnseite der Tragstruktur 3 angeordnet.

Auf der ersten Stirnseite 11 ist ein Befestigungsflansch 19 ausgebildet, um das Arretier- und Bremsmodul 1 am Achszapfen oder dem Maschinenträger zu befestigen (vgl. Figur 2).

Die Bremsvorrichtungen 7 sind jeweils an einem in radialer Richtung an der ersten Stirnseite 11 der Tragstruktur 3 nach außen vorstehenden Vorsprung angebracht und erstrecken sich mit den Bremsbelägen 9 in Richtung der zweiten Stirnseite 13, damit sie im montierten Zustand der Tragstruktur 3 durch radiales Bewegen nach Innen auf die Längsachse L zu in Richtung des Pfeils P₁ einen Reibschluss zu dem ringförmigen Bremselement 59 herstellen können.

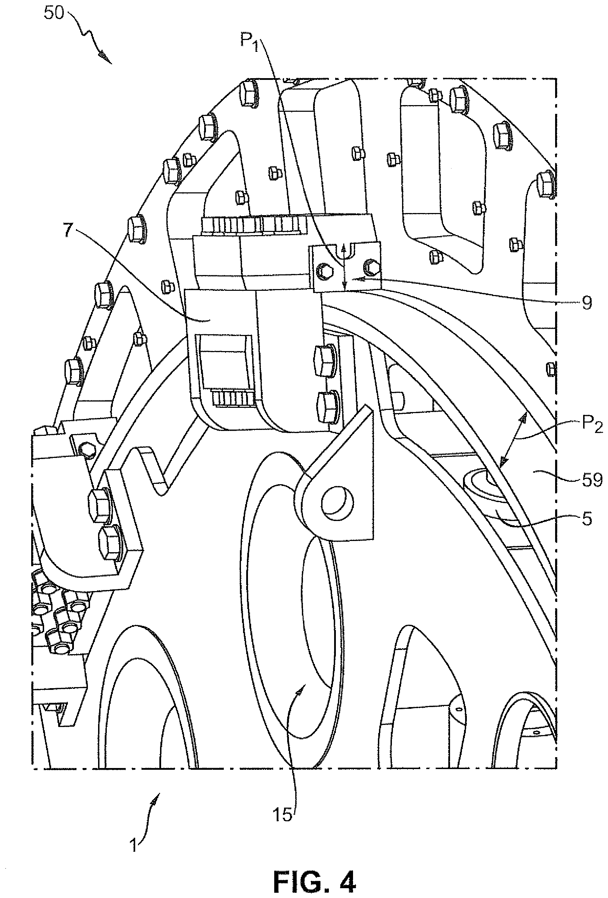

Die Arretierbolzen 5 sind im Wesentlichen vollständig in der Tragstruktur 3 eingehaust und bezogen auf die Längsachse L ebenfalls radial in Richtung des Pfeils P₂ (nur einer dargestellt) zwischen einer Freigabeposition und einer Arretierposition bewegbar. Die Anordnung der Bremsbeläge 9 relativ zu dem Bremselement 59 ist in Figur 4 dargestellt. Aus Figur 4 ebenfalls ersichtlich ist, dass die Positionierung der Arretierbolzen 5 und der Bremsvorrichtungen 7 nicht jeweils in derselben Ebene erfolgen muss, sondern am Generator 50 besonders bevorzugt in Umfangsrichtung versetzt erfolgt, um eine gleichmäßige Verteilung der Belastungen auf das Arretier- und Bremsmodul 1 zu erreichen. Um eine individuelle Austauschmöglichkeit zu gewährleisten, ist die Bremsvorrichtung 7 jeweils mit der Tragstruktur 3 des Arretier- und Bremsmoduls 1 verschraubt.

Wie sich in Zusammenschau der Figuren 2 und 4 ergibt, ist das Arretier- und Bremsmodul 1 zumindest teilweise innenliegend im Generator 50 montiert, um in Richtung der Längsachse L möglichst wenig zusätzlichen Bauraum zu erfordern. Mit Ausnahme der Bremsvorrichtungen 7 ist im Wesentlichen das gesamte Arretier- und Bremsmodul 1 innenliegend im Generator 50 angeordnet.

Die Bremsvorrichtungen des gezeigten Ausführungsbeispiels sind wahlweise als elektromagnetisch betriebene Bremsen oder als hydraulisch betriebene Bremsen ausgebildet, während die Arretierbolzen vorzugsweise als hydraulisch betätigte Elemente ausgeführt sind. Für den Fall, dass beide Funktionsgruppen als hydraulisch betätigte Elemente ausgeführt sind, werden vorzugsweise zwei separate Fluidkreisläufe bereitgestellt, um eine höchstmögliche Ausfallsicherheit zu gewährleisten, und um den jeweiligen Fluidkreislauf mit dem für die entsprechende Aufgabe (Arretierung oder Bremsung/Halterung) auslegen zu können.

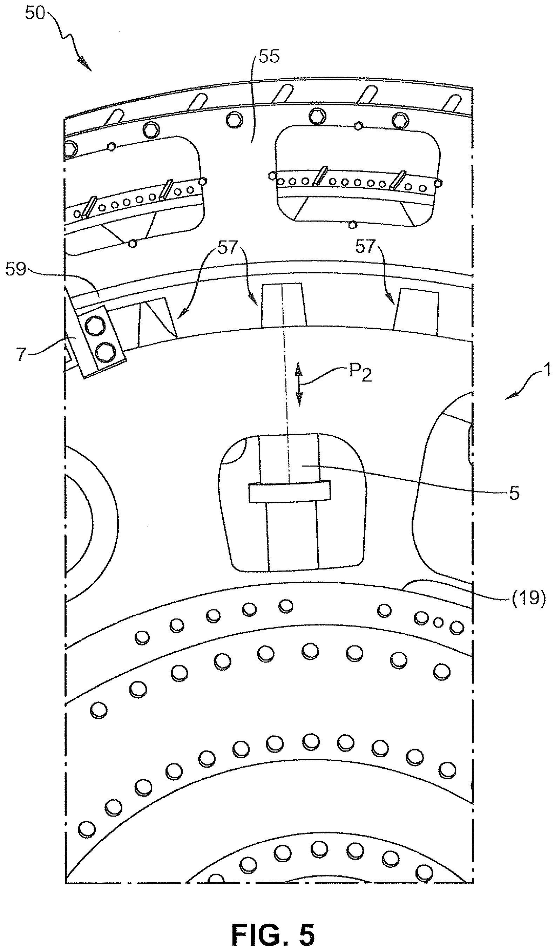

Nachdem sich die Anordnung der Bremsvorrichtung 7 aus Figur 4 ergibt, zeigt Figur 5 eine bevorzugte Anordnung der Arretierbolzen 5 im Versatz zu den Bremsvorrichtungen 7 im Generator 50. In dem Generatorrotor 55 sind radial innenliegend von dem ringförmigen Bremselement 59 aus mehrere Ausnehmungen 57 zur Aufnahme des Arretierbolzens 5 ausgebildet, um eine Arretierung des Generatorrotors 55 in verschiedenen Winkelpositionen zu ermöglichen.

Der Betrieb der Bremsvorrichtungen 7 und der Arretierbolzen 5 erfolgt vorzugsweise derart koordiniert, dass mittels der Bremsvorrichtungen 7 der Generatorrotor 55 in einer vorbestimmten Arretierungsposition gehalten wird, oder aus geringer Geschwindigkeit bis zum Stillstand in einer solchen Position abgebremst wird, in welcher sodann mittels der Bremsvorrichtungen 7 eine Haltekraft aufgebracht wird, die den Generatorrotor 55 solange hält, bis die Arretierbolzen in Richtung des Pfeils P2 in die Ausnehmungen 57 eingefahren sind, und auf diese Weise eine Arretierposition einnehmen, in welcher eine weitere Bewegung des Generatorrotors 55 nicht möglich ist.

## Patentansprüche

1. Arretier- und Bremsmodul (1) für eine Windenergieanlage (100), welche eine Rotornabe (106) und einen mit der Rotornabe (106) wirkverbundenen Generator (50) zur Erzeugung elektrischer Energie aufweist, wobei der Generator (50) einen Generatorstator (51) und einen außen um den Generatorstator (51) umlaufenden, von der Rotornabe (106) angetriebenen Generatorrotor (55) aufweist, wobei das Arretier- und Bremsmodul (1) aufweist:
- eine Tragstruktur (3),
- eine Anzahl an der Tragstruktur (3) montierter Arretierbolzen (5), die dazu eingerichtet ist bzw. sind, den Generatorrotor (55) im Stillstand zu arretieren, und
- eine Anzahl an der Tragstruktur montierter Bremsvorrichtungen (7), die dazu eingerichtet ist bzw. sind, den Generatorrotor (55) zu bremsen und/oder zumindest temporär in Stillstand zu halten,
wobei die Tragstruktur (3) um eine Längsachse (L) umlaufend ausgebildet ist, vorzugsweise ringförmig,
**dadurch gekennzeichnet, dass**
die Bremsvorrichtungen (7) jeweils mindestens einen Bremsbelag (9) aufweisen, und
wobei die Bremsbeläge (9) der Bremsvorrichtungen (7) bezogen auf die Längsachse (L) in radialer Richtung beweglich an der Tragstruktur (3) aufgenommen sind.

2. Arretier- und Bremsmodul (1) nach Anspruch 1,
wobei die Tragstruktur (3) Verbindungsmittel (19, 21) zur Montage zwischen einem Maschinenträger (111) der Windenergieanlage (100) und dem Generator (50) der Windenergieanlage (100) aufweist,
wobei vorzugsweise die Verbindungsmittel einen Flansch (19) zur Befestigung der Tragstruktur (3) an dem Maschinenträger (111) oder an einem Achszapfen (113) der Windenergieanlage (100) aufweisen.

3. Arretier- und Bremsmodul (1) nach Anspruch 2,
wobei die Verbindungsmittel einen oder mehrere Abstandshalter (21) zur Positionierung der Tragstruktur (3) relativ zu dem Generatorstator (51) aufweisen.

4. Arretier- und Bremsmodul (1) nach Anspruch 3,
wobei die Abstandshalter (21) reversibel lösbar mit der Tragstruktur (3) und dem Generatorstator (51) verbunden sind.

5. Arretier- und Bremsmodul (1) nach einem der vorstehenden Ansprüche, wobei der Generator (50) als Ringgenerator ausgebildet ist, und die Tragstruktur (3) zumindest partiell innenliegend in dem Generator (50) angeordnet ist.

6. Arretier- und Bremsmodul (1) nach einem der Ansprüche 1 bis 5,
wobei die Arretierbolzen (5) bezogen auf die Längsachse (L) in radialer Richtung beweglich an der Tragstruktur (3) aufgenommen sind.

7. Arretier- und Bremsmodul (1) nach einem der Ansprüche 1 bis 6,
wobei die Bremsvorrichtungen (7) entlang des äußeren Umfangs der Tragstruktur (3) angeordnet sind, und vorzugsweise bezogen auf die Längsachse (L) radial von der Tragstruktur (3) vorstehen.

8. Arretier- und Bremsmodul (1) nach einem der vorstehenden Ansprüche, wobei die Arretierbolzen (5) mit einem ersten Antrieb wirkverbunden und mittels des Antriebs zwischen einer Freigabestellung und einer Arretierstellung hin und her bewegbar sind, wobei der Antrieb der Arretierbolzen (5) als fluidischer Antrieb, vorzugsweise als hydraulischer Antrieb ausgebildet ist.

9. Arretier- und Bremsmodul (1) nach einem der vorstehenden Ansprüche, wobei die Bremsbeläge (7) der Bremsvorrichtungen (9) jeweils mit einem zweiten Antrieb wirkverbunden und mittels des Antriebs zwischen einer Freigabestellung und einer Bremsstellung hin und her bewegbar sind, wobei der Antrieb der Bremsvorrichtungen als elektromagnetischer Antrieb ausgebildet ist, oder als fluidischer Antrieb, vorzugsweise als hydraulischer Antrieb, ausgebildet ist.

10. Arretier- und Bremsmodul (1) nach einem der vorstehenden Ansprüche, wobei die Tragstruktur (3) mehrere Lüftungsausnehmungen (15) aufweist, die sich, vorzugsweise in Richtung der Längsachse (L), durch die Tragstruktur (3) hindurch erstrecken, und wobei weiter vorzugsweise einer, mehreren oder sämtlichen der Lüftungsausnehmungen (15) ein Lüfter (17) zum Erzeugen eines Luftstroms zugeordnet ist.

11. Generator (50) für eine Windenergieanlage (100), welche eine Rotornabe (106) aufweist, wobei der Generator (50) dazu eingerichtet ist, mit der Rotornabe (106) wirkverbunden zu werden und elektrische Energie zu erzeugen, mit
- einem Generatorstator (51),
- einem außen um den Generatorstator (51) umlaufenden, von der Rotornabe (106) angetriebenen Generatorrotor (55), und einem Arretier- und Bremsmodul (1),
wobei das Arretier- und Bremsmodul (1) nach einem der vorstehenden Ansprüche ausgebildet ist.

12. Generator (50) nach Anspruch 11,
wobei der Generatorrotor (55) ein zumindest teilweise ringförmig umlaufend ausgebildetes Bremselement (59) aufweist, und die Bremsbeläge (9) des Arretier- und Bremsmoduls (1) dazu eingerichtet sind, reibschlüssig oder kraftschlüssig an dem Bremselement (59) anzugreifen.

13. Generator (50) nach Anspruch 11 oder 12,
wobei der Generatorrotor (55) mehrere Ausnehmungen (57) zur wenigstens partiellen Aufnahme jeweils eines der Arretierbolzen (5) aufweist.

14. Windenergieanlage, welche eine Rotornabe (106) und einen mit der Rotornabe (106) wirkverbundenen Generator (50) zur Erzeugung elektrischer Energie aufweist, wobei der Generator (50) nach einem der Ansprüche 11 bis 13 ausgebildet ist.

## Claims

1. A latching and braking module (1) for a wind turbine (100) which comprises a rotor hub (106) and a generator (50) which is operationally connected with said rotor hub (106) to produce electric energy, wherein said generator (50) comprises a generator stator (51) and a generator rotor (55) which is arranged to extend externally circumferentially about said generator stator (51) and to be driven by said rotor hub (106), with said latching and braking module (1) comprising:
- a support structure (3),
- a number of latching bolts (5) mounted on said support structure (3), adapted to latch said generator rotor (55) in its stopped position, and
- a number of braking devices (7) mounted on said support structure, adapted to brake, and/or at least temporarily hold, said generator rotor (55) in said stopped position,
wherein said support structure (3) is configured to extend circumferentially about a longitudinal axis (L), preferably annularly,
**characterized in that**:
said braking devices (7) each comprise at least one brake lining (9), and
wherein said brake linings (9) of said braking devices (7) are received on said support structure (3) to be movable in the radial direction relative to said longitudinal axis (L).

2. The latching and braking module (1) according to claim 1,
wherein said support structure (3) comprises connection means (19, 21) for installation between a base frame (111) of said wind turbine (100) and said generator (50) of said wind turbine (100),
preferably wherein said connection means comprise a flange (19) for attaching said support structure (3) to said base frame (111) or a kingpin (113) of said wind turbine (100).

3. The latching and braking module (1) according to claim 2,
wherein said connection means comprise one or more spacers (21) for positioning said support structure (3) relative to said generator stator (51).

4. The latching and braking module (1) according to claim 3,
wherein said spacers (21) are connected with said support structure (3) and said generator stator (51) to be reversibly detachable.

5. The latching and braking module (1) according to any one of the preceding claims,
wherein said generator (50) is configured as a ring generator, and wherein said support structure (3) is arranged at least partially inside said generator (50).

6. The latching and braking module (1) according to any one of claims 1 to 5,
wherein said latching bolts (5) are received on said support structure (3) to be movable in the radial direction relative to said longitudinal axis (L).

7. The latching and braking module (1) according to any one of claims 1 to 6,
wherein said braking devices (7) are arranged along said outer circumference of said support structure (3) and preferably project radially from said support structure (3) relative to said longitudinal axis (L).

8. The latching and braking module (1) according to any one of the preceding claims,
wherein said latching bolts (5) are operatively connected with a first drive and are reciprocatable by said drive between a released position and a latched position, wherein said drive of said latching bolts (5) is configured as a fluidic drive, preferably as a hydraulic drive.

9. The latching and braking module (1) according to any one of the preceding claims,
wherein said brake linings (7) of said braking devices (9) each are operatively connected with a second drive and are reciprocatable between a released position and a braked position by said drive, wherein said drive of said braking devices is configured as an electromagnetic drive or as a fluidic drive, preferably as a hydraulic drive,.

10. The latching and braking module (1) according to any one of the preceding claims,
wherein said support structure (3) comprises a plurality of venting recesses (15) which, preferably in the direction of said longitudinal axis (L), extend through said support structure (3), and wherein a blower (17) for producing an air stream is associated with preferably one, some or all of the venting recesses (15).

11. A generator (50) for a wind turbine (100) comprising a rotor hub (106), wherein said generator (50) is adapted to be operatively connected with said rotor hub (106) and to produce electric energy, comprising
- a generator stator (51),
- a generator rotor (55) arranged to extend externally circumferentially about said generator stator (51) and driven by said rotor hub (106), and a latching and braking module (1), wherein said latching and braking module (1) is configured according to any one of the preceding claims.

12. The generator (50) according to claim 11,
wherein said generator rotor (55) comprises a braking component (59) which is configured to extend at least partially annularly circumferentially, and the brake linings (9) of said latching and braking module (1) are adapted to engage with said braking component (59) in friction-fitting or force-fitting manner.

13. The generator (50) according to claim 11 or 12,
wherein said generator rotor (55) comprises a plurality of recesses (57) to at least partially receive one of said latching bolts (5) each.

14. A wind turbine comprising a rotor hub (106) and a generator (50) operatively connected with said rotor hub (106) to produce electric energy, wherein said generator (50) is configured according to any one of claims 11 to 13.

## Revendications

1. Module d'arrêt et de freinage (1) pour une éolienne (100), laquelle présente un moyeu de rotor (106) et un générateur (50) en liaison fonctionnelle avec le moyeu de rotor (106) destiné à produire de l'énergie électrique, dans lequel le générateur (50) présente un stator de générateur (51) et un rotor de générateur (55) tournant en périphérie côté extérieur autour du stator de générateur (51), entraîné par le moyeu de rotor (106), dans lequel le module d'arrêt et de freinage (1) présente :
- une structure porteuse (3),
- un nombre de boulons d'arrêt (5) montés sur la structure porteuse (3), qui est ou sont mis au point pour mettre le rotor de générateur (55) à l'arrêt, et
- un nombre de dispositifs de freinage (7) montés sur la structure porteuse, qui est ou sont mis au point pour freiner le rotor de générateur (55) et/ou pour le maintenir au moins temporairement à l'arrêt,
dans lequel la structure porteuse (3) est réalisée de manière à tourner en périphérie autour d'un axe longitudinal (L), de préférence avec une forme annulaire,
**caractérisé en ce que**
les dispositifs de freinage (7) présentent respectivement au moins une garniture de freinage (9), et
dans lequel les garnitures de freinage (9) des dispositifs de freinage (7) sont logées sur la structure porteuse (3) de manière mobile dans la direction radiale par rapport à l'axe longitudinal (L).

2. Module d'arrêt et de freinage (1) selon la revendication 1,
dans lequel la structure porteuse (3) présente des moyens de raccordement (19, 21) destinés au montage entre un support de machine (111) de l'éolienne (100) et le générateur (50) de l'éolienne (100),
dans lequel de préférence les moyens de raccordement présentent une bride (19) destinée à fixer la structure porteuse (3) sur le support de machine (111) ou sur un tourillon axial (113) de l'éolienne (100).

3. Module d'arrêt et de freinage (1) selon la revendication 2,
dans lequel les moyens de raccordement présentent un ou plusieurs écarteurs (21) destinés à positionner la structure porteuse (3) par rapport au stator de générateur (51).

4. Module d'arrêt et de freinage (1) selon la revendication 3,
dans lequel les écarteurs (21) sont raccordés de manière amovible et réversible à la structure porteuse (3) et au stator de générateur (51).

5. Module d'arrêt et de freinage (1) selon l'une quelconque des revendications précédentes, dans lequel le générateur (50) est réalisé en tant que générateur annulaire, et la structure porteuse (3) est disposée de manière à être située au moins en partie à l'intérieur dans le générateur (50).

6. Module d'arrêt et de freinage (1) selon l'une quelconque des revendications 1 à 5,
dans lequel les boulons d'arrêt (5) sont logés sur la structure porteuse (3) de manière mobile dans la direction radiale par rapport à l'axe longitudinal (L).

7. Module d'arrêt et de freinage (1) selon l'une quelconque des revendications 1 à 6,
dans lequel les dispositifs de freinage (7) sont disposés le long de la périphérie extérieure de la structure porteuse (3), et font saillie radialement de la structure porteuse (3) de préférence par rapport à l'axe longitudinal (L).

8. Module d'arrêt et de freinage (1) selon l'une quelconque des revendications précédentes,
dans lequel les boulons d'arrêt (5) sont en liaison fonctionnelle avec un premier entraînement et peuvent être déplacés en va-et-vient entre une position de libération et une position d'arrêt au moyen de l'entraînement, dans lequel l'entraînement des boulons d'arrêt (5) est réalisé en tant qu'entraînement fluidique, de préférence en tant qu'entraînement hydraulique.

9. Module d'arrêt et de freinage (1) selon l'une quelconque des revendications précédentes,
dans lequel les garnitures de freinage (7) des dispositifs de freinage (9) sont en liaison fonctionnelle respectivement avec un deuxième entraînement et peuvent être déplacées en va-et-vient entre une position de libération et une position de freinage au moyen de l'entraînement, dans lequel l'entraînement des dispositifs de freinage est réalisé en tant qu'entraînement électromagnétique ou est réalisé en tant qu'entraînement fluidique, de préférence en tant qu'entraînement hydraulique.

10. Module d'arrêt et de freinage (1) selon l'une quelconque des revendications précédentes,
dans lequel la structure porteuse (3) présente plusieurs évidements d'aération (15), qui s'étendent à travers la structure porteuse (3) de part en part, de préférence en direction de l'axe longitudinal (L), et dans lequel un ventilateur (17) destiné à produire un flux d'air est associé par ailleurs de préférence à un, plusieurs ou la totalité des évidements d'aération (15).

11. Générateur (50) pour une éolienne (100), laquelle présente un moyeu de rotor (106), dans lequel le générateur (50) est mis au point pour être en liaison fonctionnelle avec le moyeu de rotor (106) et pour produire de l'énergie électrique, avec
- un stator de générateur (51),
- un rotor de générateur (55) tournant en périphérie côté extérieur autour du stator de générateur (51), entraîné par le moyeu de rotor (106), et un module d'arrêt et de freinage (1),
dans lequel le module d'arrêt et de freinage (1) est réalisé selon l'une quelconque des revendications précédentes.

12. Générateur (50) selon la revendication 11,
dans lequel le rotor de générateur (55) présente un élément de freinage (59) réalisé au moins en partie de manière annulaire pour tourner en périphérie, et les garnitures de freinage (9) du module d'arrêt et de freinage (1) sont mises au point pour s'engager sur l'élément de freinage (59) par friction ou à force.

13. Générateur (50) selon la revendication 11 ou 12,
dans lequel le rotor de générateur (55) présente plusieurs évidements (57) destinés à loger au moins en partie respectivement un des boulons d'arrêt (5).

14. Eolienne, laquelle présente un moyeu de rotor (106) et un générateur (50) en liaison fonctionnelle avec le moyeu de rotor (106), destiné à produire de l'énergie électrique, dans laquelle le générateur (50) est réalisé selon l'une quelconque des revendications 11 à 13.
